# EUROPÄISCHE PATENTSCHRIFT

(11) **EP 2 140 042 B1**
(45) Veröffentlichungstag und Bekanntmachung des Hinweises auf die Patenterteilung: **22.04.2020**
(21) Anmeldenummer: 08701169.8
(22) Anmeldetag: 19.01.2008
(51) Int. Cl.: C23C 24/10, C21D 1/09, B23K 13/01, B23K 26/34

(54) **ERZEUGUNG EINES PARTIELLEN FASERVERBUNDGEFÜGES IN EINEM BAUTEIL ÜBER EINE LASERUMSCHMELZBEHANDLUNG**
PRODUCTION OF A PARTIAL FIBER COMPOSITE STRUCTURE IN A COMPONENT USING A LASER REMELTING TREATMENT
GÉNÉRATION D'UNE PARTIE STRUCTURE COMPOSITE À FIBRES D'UN COMPOSANT PAR TRAITEMENT DE REFUSION PAR LASER

(30) Priorität: 17.03.2007 DE 102007012845
(43) Veröffentlichungstag der Anmeldung: 06.01.2010
(73) Patentinhaber: KS Kolbenschmidt GmbH, 74172 Neckarsulm (DE)
(72) Erfinder: LUFT, Jochen, 01733 Kesselsdorf (DE); STEFFENS, Thomas, 74906 Bad-Rappenau (DE); SCHALLER, Christian, 74842 Billigheim (DE)
(74) Vertreter: Greif, Thomas
(86) Internationale Anmeldenummer: PCT/EP2008/000398
(87) Internationale Veröffentlichungsnummer: WO 2008/113422

(56) Entgegenhaltungen:
- EP-A- 0 622 476
- EP-A- 1 127 958
- WO-A-99/44773
- DE-A1- 3 246 630
- DE-A1- 4 418 750
- DE-A1- 19 907 105
- US-A1- 2003 068 518
- PAWLOWSKI L: "Thick laser coatings: A review" JOURNAL OF THERMAL SPRAY TECHNOLOGY, Bd. 8, Nr. 2, 1999, Seiten 279-295, XP009097214 OH, USA ISSN: 1059-9630
- MIRACLE ET AL: "Metal matrix composites - From science to technological significance" COMPOSITES SCIENCE AND TECHNOLOGY, ELSEVIER, Bd. 65, Nr. 15-16, Dezember 2005 (2005-12), Seiten 2526-2540, XP005148124 ISSN: 0266-3538

## Beschreibung

Die Erfindung betrifft ein Verfahren zur Erzeugung einer gehärteten Oberfläche eines Bauteils aus einem gegossenen, geschmiedeten oder stranggepressten metallischen Werkstoff sowie ein nach diesem Verfahren gehärtetes Bauteil gemäß den Oberbegriffen des jeweiligen unabhängigen Patentanspruches 1 bzw. 7.

Zur Härtung bzw. Erhöhung der thermischen Wechselfestigkeit von Oberflächen von Bauteilen, die aus einem Metallwerkstoff gegossen sind, ist es bekannt, dass in eine Gießform eine Preform, die porös ist, eingebracht wird und unter Druckeinwirkung mit der Gießschmelze infiltriert wird. Eine derart infiltrierte Preform ist z.B. bei Kurbelgehäusen von Brennkraftmaschinen bekannt, um die Zylinderlauffläche zu härten. Ähnliches erfolgt zur Härtung des Muldenrandes von Brennraummulden von Kolben für Brennkraftmaschinen, bei denen ebenfalls eine Preform in die Gießform für den Kolbenrohling eingesetzt wird und anschließend unter Druckeinwirkung mit der Gießschmelze infiltriert wird. Diese Art und Weise der Härtung eines definierten Werkstoffvolumens der Oberfläche und damit eine Verbesserung der Warmfestigkeit hat zwar eine zufrieden stellende Wirkung, nämlich eine gehärtete Oberfläche, jedoch ist der hierfür zu treibende Aufwand von Nachteil, da eine erhebliche Veränderung des Gießprozesses erforderlich ist. Außerdem haben die porösen und äußerst starren Preformen, insbesondere Faser-Preformen, den Nachteil, dass sie sehr zerbrechlich sind und somit beim Herstellen der Bauteile (wie z.B. Kurbelgehäuse oder Kolben) zu einem sehr hohen Ausschuss führen. Außerdem ist der zu härtende Bereich durch die Form der Preform vorgegeben, so dass kein Einfluss auf die zu härtende Oberfläche und deren Bereich nach dem Gießen des Bauteils genommen werden kann.

Die EP 0 622 476 A offenbart einen Werkstoff aus Aluminium oder Aluminiumlegierungen mit einer verschleißfesten und tragenden MMC-Oberflächenschicht. MMC steht dabei für die englische Abkürzung Metal Matrix Composite und bedeutet Metall-Matrix-Verbundschicht. Die MMC-Schicht enthält homogen verteilte SiC-Partikel in einer AISi-Matrix mit Silizium-Primärkristallen. Die EP 0 622 476 A betrifft auch das Verfahren zur laserinduzierten Herstellung der verschleißfesten und tragenden MMC-Schichten auf Substraten aus Aluminium oder Aluminiumlegierungen. Hier ist vorgesehen, Silizium-Karbid-Partikel in eine Aluminium-Silizium-Matrix einzubringen und auf der Oberfläche eines Werkstoffes aus Aluminium oder einer Aluminiumlegierung als Substrat abzuscheiden. Das Einbringen von Fasern zur Erzeugung einer gehärteten Oberfläche eines Kolbens einer Brennkraftmaschine ist hier nicht vorgesehen.

Die US 2003/068518 A1 offenbart ein Precursor-basiertes Verfahren zur Herstellung von Metall-Matrix-Verbundwerkstoff-Beschichtungen (MMC) auf Stahl- und Aluminiumsubstraten für eine verbesserte Verschleißfestigkeit, Korrosionsbeständigkeit und Oxidationsbeständigkeit. Der Precusor-Draht kann aus Matrix-Metall-Folien und Verstärkungspulver oder -fasern hergestellt sein. Hier wird das Einbringen eines Precusor-Drahtes, der aus Matrix-Metall-Folien und Verstärkungspulver oder -fasern hergestellt ist, beschrieben, jedoch nicht das Einbringen eines faserförmigen Zusatzwerkstoffes bzw. einer Komponente des Zusatzwerkstoffes welche faserförmig ist oder ein Fülldraht ist, der Fasern enthält zur Erzeugung einer gehärteten Oberfläche eines Kolbens einer Brennkraftmaschine.

Die DE 32 46 630 A1 behandelt ein Verfahren zur Herstellung verschleißfester Oberflächen der Ringnuten von aus Aluminiumkolbenlegierungen bestehenden Kolben für Brennkraftmaschinen. Zur Herstellung der verschleißfesten Oberflächen wird das Lichtbogenschweißen angewendet, indem zum Zwecke der Verringerung des Herstellungsaufwandes und ohne die Masse des Kolbens zu erhöhen, jeweils in den Kolbenrohling im Bereich der obersten Ringnut eine Nut eingestochen und mit einem aus einer siliziumhaltigen Aluminiumlegierung bestehenden Zusatzwerkstoff, in den die Ringnut eingestochen wird, aufgefüllt wird. Hier wird kein Zusatzwerkstoff in ein erzeugtes Schmelzbad gegeben, sondern eine zuvor durch ein spanabhebendes Verfahren erzeugte Nut mit einem Zusatzwerkstoff aufgefüllt, in den wiederum eine Ringnut eingestochen wird.

Die EP 1 127 958 A offenbart ein Verfahren zum Laserbeschichten einer Oberfläche, insbesondere einer Innenfläche einer zylinderförmigen Bohrung eines Bauteils, insbesondere eines Aluminium-Zylinderkurbelgehäuses einer Brennkraftmaschine, wobei ein Grundwerkstoff der Oberfläche mittels eines Laserstrahls zu einem lokalen Schmelzbad aufgeschmolzen und ein wenigstens eine Komponente aufweisendes Legierungspulver in das Schmelzbad eingebracht wird. Hierbei wird das Schmelzbad derart gebildet bzw. wird/werden die Komponente/Komponenten des Legierungspulvers derart gewählt, dass wenigstens eine Komponente des Legierungspulvers in dem Schmelzbad nicht oder nur teilweise aufgeschmolzen wird, so dass diese Komponente vollständig oder wenigstens teilweise im festen Aggregatzustand in den Grundwerkstoff eingebettet wird. Hier wird das Einbringen eines Legierungspulvers beschrieben, jedoch nicht das Einbringen eines faserförmigen Zusatzwerkstoffes bzw. einer Komponente des Zusatzwerkstoffes, welche faserförmig ist oder ein Fülldraht ist, der Fasern enthält zur Erzeugung einer gehärteten Oberfläche eines Kolbens einer Brennkraftmaschine.

Die DE 199 07 105 A1 betrifft ein Verfahren und eine Vorrichtung zum Herstellen von verschleißfesten, tribologischen Zylinderlaufflächen für in Zylindern eines Kurbelgehäuses einer Brennkraftmaschine laufenden Kolben, mit einem Laser und einer Pulverzuführungseinrichtung, welche einen Strahl eines pulverförmigen Werkstoffes durch einen Laserstrahl des Lasers führt. Hierbei ist die Pulverzuführungseinrichtung durch den Laser hindurch verlaufend angeordnet, wobei eine Strahlumlenkvorrichtung für den Laserstrahl derart angeordnet ist, dass diese den Laserstrahl auf einen Auftreffpunkt des Strahls mit dem pulverförmigen Werkstoff auf die Zylinderlauffläche lenkt. Hier wird das Einbringen eines Pulvers beschrieben, nicht das Einbringen eines faserförmigen Zusatzwerkstoff bzw. einer Komponente des Zusatzwerkstoffes, welche faserförmig ist oder ein Fülldraht ist, der Fasern enthält zur Erzeugung einer gehärteten Oberfläche eines Kolbens einer Brennkraftmaschine.

PAWLOWSKI L: "Thick laser coatings: A review", Journal of Thermal Spray Technology, ISSN: 1059-9630, Bd. 8, Nr. 2, 1999, S. 279/95 beschreibt die Anwendung von Lasern in Prozessen zur Beschichtungsabscheidung. Nach einer Einführung über die Typen und Eigenschaften des Lasers und der emittierten Lichtstrahlen wird der Mechanismus der Wechselwirkung zwischen einem Laserstrahl mit typischen Beschichtungsmaterialien dargestellt. Die typischen Laserbehandlungsprozesse und ihre Eigenschaften werden dargestellt. Neuere Arbeiten auf dem Gebiet der Beschichtungen in einem Schritt und auf dem Gebiet der zwei-Schritt-Laser-Beschichtungen werden überprüft. Schließlich werden die neuen Anwendungen der Laser-Prozesse in thermisch gespritzten Schichten diskutiert.

Die DE 44 18 750 A1 betrifft Verstärkungsteilchen zur Erzeugung von auf Verschleiß beanspruchte und/oder durch Bewegungsvorgänge belastete Oberflächen, bestehend aus Stoffen hoher Härte und weiteren Trägersubstanzen, wobei die zum Einsatz kommenden Stoffe allein oder in Gemengen oder Gemischen magnetisch oder magnetisierbar sind, sowie ein Verfahren zur Herstellung von verschleißfesten Oberflächen unter Verwendung von Verstärkungsteilchen. Bei diesem Verfahren werden die Verstärkungsteilchen in einen vorgeformten Körper eingebettet und dieser in die Gießform eingesetzt. Die Verstärkungsteilchen sind auf einer magnetischen Walze aufgebracht und werden in die zu verstärkende Oberfläche eingewalzt. Hier werden Verstärkungsteilchen zuvor in eine Form eingebracht oder in die Oberfläche eingewalzt. Abgesehen davon, dass keine faserförmige Komponente vorgesehen ist, ist es durch dieses Verfahren nur schwer möglich, Komponenten in der Oberfläche homogen zu verteilen.

Der Erfindung liegt daher die Aufgabe zu Grunde, ein Verfahren zur Erzeugung einer gehärteten Oberfläche eines Bauteils aus einem gegossenen Metallwerkstoff sowie ein nach diesem Verfahren gehärtetes Bauteil zur Verfügung zu stellen, mit dem die eingangs geschilderten Nachteile vermieden werden. Vor allen Dingen soll die Warmfestigkeit und die thermo-mechanische Ermüdungsfestigkeit des Bauteils, vorzugsweise eines gegossenen Kolbens einer Brennkraftmaschine, durch Erzeugung eines partiell gehärteten Werkstoffvolumens verbessert werden.

Diese Aufgabe ist durch die Merkmale der unabhängigen Patentansprüche 1 und 7 gelöst.

Bei dem Verfahren wird nach dem Gießen des Bauteils (und nachdem es erstarrt ist) zumindest ein Teil der Oberfläche des Bauteils durch Energiezufuhr aufgeschmolzen und ein Zusatzwerkstoff in das erzeugte Schmelzbad (also die aufgeschmolzene Oberfläche) gegeben und die Erstarrung des Schmelzbades mit dem Zusatzwerkstoff abgewartet, so dass anschließend in diesem Bereich die Oberfläche des Bauteils gehärtet ist. Durch geeignete Energiezufuhr, vorzugsweise mittels Laserbestrahlung oder einer Kombination aus Laser und Induktion, kann also der gewünschte Teil der Oberfläche des Bauteils aufgeschmolzen werden und dort gezielt ein Zusatzwerkstoff in das Schmelzbad gegeben werden, um mittels des Zusatzwerkstoffes ein partielles Verbundgefüge zu erzeugen, das sich von dem ursprünglichen Gefüge des gegossenen Bauteils unterscheidet. Durch geeignete Wahl des Materials und/oder der konstruktiven Ausgestaltung des Zusatzwerkstoffes kann also ganz gezielt der gewünschte Bereich der Oberfläche des Bauteils gehärtet werden. Das Verfahren bewirkt also eine gezielte Aufschmelzung der gewünschten Oberfläche des Bauteils, dem ein Zusatzwerkstoff beigegeben wird, nachdem oder während die Energiezufuhr erfolgt (ist), so dass der Zusatzwerkstoff ebenfalls mit aufgeschmolzen wird (dies gilt allerdings nicht für keramische Zusatzstoffe) und sich mit dem aufgeschmolzenem Bereich des gegossenen Bauteils vermischt. Nach dem Härten der aufgeschmolzenen Bestandteile steht dann die gehärtete Oberfläche des Bauteils zur Verfügung.

Nach der Erfindung ist der Zusatzwerkstoff ein Fülldraht, der Fasern enthält, wie zum Beispiel Kohlenstoff-Fasern, Oxid-Fasern (Al2O3,Saffil) oder Aramit-Fasern. Auch dies trägt zur Verbesserung der Material- und der späteren Bauteileigenschaften bei. Solche faserförmigen Werkstoffe haben den Vorteil, dass dadurch das Faserverbundgefüge deutlich fester wird gegenüber Gefügen, die aus einzelnen Partikeln bestehen.

In Weiterbildung der Erfindung kann als Zusatzwerkstoff ein Legierungspulver wie zum Beispiel Nickel, Silizium, Eisen oder Kupfer (oder eine Mischung davon) zur Verbesserung der Material- und der späteren Bauteileigenschaften eingesetzt werden.

In Weiterbildung der Erfindung wird als Zusatzwerkstoff ein Hartpartikelwerkstoff wie zum Beispiel Al2O3, SiC, BN (oder eine Kombination davon) zur Verbesserung der Material- und der späteren Bauteileigenschaften eingesetzt.

In Weiterbildung der Erfindung enthält der Zusatzwerkstoff karbidische und/oder oxidische Komponenten wie zum Beispiel AIN, VC, Cr2C3, TiB2, TaC(oder eine Kombination davon) zur Verbesserung der Material- und der späteren Bauteileigenschaften.

Nach der Erfindung ist somit vorgesehen, dass der Zusatzwerkstoff drahtförmig ist. Dies hat den Vorteil, dass insbesondere gleichzeitig mit dem Aufschmelzen der Oberfläche des Bauteils durch Energiezufuhr auch der Zusatzwerkstoff aufgeschmolzen wird und sich die beteiligten Materialien miteinander vermischen. In einem solchen Fall ist es von besonderem Vorteil, wenn der drahtförmige Zusatzwerkstoff zumindest einen Zusatzwerkstoff enthält, der ein Legierungspulver und/oder einen Hartpartikelwerkstoff und/oder karbidische und/oder oxidische Komponenten enthält. Damit sind beispielsweise als Zusatzwerkstoff Fülldrähte denkbar, welche die genannten Legierungspulver, aber auch Hartstoffpartikel und faserförmige karbidische oder oxidische Komponenten enthalten kann.

Weiterhin stellt die Erfindung ein Bauteil zur Verfügung, dessen Oberfläche zumindest teilweise gehärtet ist nach einem der Verfahren gemäß den Patentansprüchen 1 bis 7. Während grundsätzlich jedes aus einem Metallwerkstoff gegossene Bauteil in Betracht kommt, ist es von besonderem Vorteil, wenn das Bauteil ein Bestandteil einer Brennkraftmaschine ist. Bestandteile von Brennkraftmaschinen wie z.B. Kurbelgehäuse, Kolben, Pleuel, Bolzen und dergleichen (keine vollständige Aufzählung) sind tribologisch hoch belastete Bauteile, insbesondere in Hinblick auf Belastungen durch Temperatur und/oder Druck. Daher ist es von besonderem Vorteil, wenn Bereiche (Oberflächen) von Bauteilen von Brennkraftmaschinen zumindest partiell, gegebenenfalls aber auch vollständig, gehärtet sind, was in vorteilhafter Weise nach dem erfindungsgemäßen Verfahren erfolgt. Besonders bevorzugt ist die Anwendung des erfindungsgemäßen Verfahrens bei einem Kolben der Brennkraftmaschine, wobei der Kolben eine Brennraummulde aufweist und der Rand der Brennraummulde besonderen hohen Beanspruchungen durch die dort herrschenden Verbrennungsdrücke und -temperaturen beansprucht ist. Mit dem erfindungsgemäßen Verfahren wird somit im Randbereich der Brennraummulde über eine geeignete Energiezufuhr, insbesondere über die Laserumschmelzbehandlung, ein partielles Faserverbundgefüge in dem Material des Muldenrandes (insbesondere einer Aluminium-Gusslegierung) erzeugt, wodurch es zu einer deutlichen Verbesserung der Warmfestigkeit und einer verbesserten thermo-mechanischen Ermüdungsfestigkeit zumindest in diesem Bereich kommt. Denn das während der Laserumschmelzbehandlung erzeugte Schmelzbad im Bereich des Muldenrandes biete die Möglichkeit, über die genannten Zusatzwerkstoffe, insbesondere die drahtförmigen Zusatzwerkstoffe, eine partielle legierungstechnische Veränderung am Muldenrand vorzunehmen, so dass nach dem Aufschmelzen und dem Erstarren der aufgeschmolzenen Bereiche diese erstarrten Bereiche hinsichtlich ihrer Warmfestigkeit und ihrer thermo-mechanischen Ermüdungsfestigkeit wesentlich verbessert sind.

Zur Durchführung des erfindungsgemäßen Verfahrens zur Härtung der Brennraummulde wird beispielsweise vorgeschlagen, den gegossenen Kolben in Rotation zu bringen und dabei den zu härtenden Muldenrandbereich mit Laserstrahlen zu beaufschlagen, um den Bereich aufzuschmelzen. Im Auftreffpunkt der Laserstrahlen oder bei Betrachtung der Rotationsrichtung dahinter, wird der drahtförmige Zusatzwerkstoff zugeführt und ebenfalls durch die aufgeschmolzenen Bereiche aufgeschmolzen oder gleichzeitig mit den Laserstrahlen aufgeschmolzen. Nach einer vollständigen Umdrehung des Kolbens erfolgt keine Laserbestrahlung und keine Zufuhr von Zusatzwerkstoffen mehr, so dass das Erstarren der aufgeschmolzenen Bereiche abgewartet werden kann und danach die gehärtete Oberfläche zur Verfügung steht. Diese kann gegebenenfalls nachbearbeitet werden.

Obwohl das erfindungsgemäße Verfahren vorstehend in Zusammenhang mit der Härtung des Muldenrandes eines Kolbens beschrieben worden ist, stellt dies keine Einschränkung bei der Anwendung des erfindungsgemäßen Verfahrens dar. Selbstverständlich können auch andere Oberflächen von Bauteilen von Brennkraftmaschinen mit dem erfindungsgemäßen Verfahren gehärtet werden, so z.B. die Laufflächen des Kolbens im Zylinder der Brennkraftmaschine, die Oberfläche des Kolbenbolzens, die Lagerflächen des Kolbenbolzens im Kolben oder im Pleuel oder dergleichen.

Das vorstehend beschriebene Verfahren läßt sich nicht nur bei gegossenen Bauteilen anwenden, sondern auch bei Bauteilen, die z.B. in einem Schmiedeverfahren oder in einem Strangpreßverfahren oder einer Kombination davon hergestellt worden sind.

## Patentansprüche

1. Verfahren zur Erzeugung einer gehärteten Oberfläche eines Bauteiles einer Brennkraftmaschine aus einem gegossenen oder geschmiedeten oder stranggepresstem Metallwerkstoff, wobei zumindest ein Teil der Oberfläche des Bauteiles durch Energiezufuhr aufgeschmolzen und ein Zusatzwerkstoff in das erzeugte Schmelzbad gegeben und die Erstarrung des Schmelzbades mit dem Zusatzwerkstoff abgewartet wird, so dass anschließend in diesem Bereich die Oberfläche des Bauteils gehärtet ist, **dadurch gekennzeichnet, dass** der Zusatzwerkstoff ein Fülldraht ist, der Fasern enthält.

2. Verfahren nach Anspruch 1, **dadurch gekennzeichnet, dass** die Energiezufuhr mittels Laserbestrahlung oder einer Kombination aus Laser und Induktion erfolgt.

3. Verfahren nach Anspruch 1, **dadurch gekennzeichnet, dass** der Zusatzwerkstoff ein Legierungspulver enthält.

4. Verfahren nach Anspruch 1, **dadurch gekennzeichnet, dass** der Zusatzwerkstoff einen Hartpartikelwerkstoff enthält.

5. Verfahren nach Anspruch 1, 2, 3 oder 4, **dadurch gekennzeichnet, dass** der Zusatzwerkstoff karbidische und/oder oxidische Komponenten enthält.

6. Verfahren nach einem der vorhergehenden Ansprüche, **dadurch gekennzeichnet, dass** der Zusatzwerkstoff drahtförmig ist und zumindest einen der in den vorhergehenden Patentansprüchen angegebenen Zusatzwerkstoff enthält.

7. Oberfläche eines Bauteiles einer Brennkraftmaschine, dessen Oberfläche zumindest teilweise gehärtet ist nach einem Verfahren gemäß den vorhergehenden Patentansprüchen.

8. Bauteil nach Anspruch 7, wobei das Bauteil ein Bestandteil einer Brennkraftmaschine ist.

9. Bauteil nach Anspruch 8, wobei das Bauteil ein Kolben der Brennkraftmaschine ist.

## Claims

1. Method for producing a hardened surface of a component of an internal combustion engine of a cast or forged or extruded metal material, at least part of the surface of the component being melted by supplying energy and an additional material being introduced into the molten bath created and the molten bath with the additional material being left to solidify, so that subsequently in this region the surface of the component is hardened, **characterized in that** the additional material is a filler wire that contains fibres.

2. Method according to Claim 1, **characterized in that** the energy is supplied by means of laser irradiation or a combination of laser and induction.

3. Method according to Claim 1, **characterized in that** the additional material contains an alloying powder.

4. Method according to Claim 1, **characterized in that** the additional material contains a hard particle material.

5. Method according to Claim 1, 2, 3 or 4, **characterized in that** the additional material contains carbidic and/or oxidic components.

6. Method according to one of the preceding claims, **characterized in that** the additional material is in the form of a wire and contains at least one of the additional materials specified in the preceding patent claims.

7. Surface of a component of an internal combustion engine, the surface of which is at least partially hardened by a method according to the preceding patent claims.

8. Component according to Claim 7, the component being part of an internal combustion engine.

9. Component according to Claim 8, the component being a piston of the internal combustion engine.

## Revendications

1. Procédé de génération d'une surface durcie d'un composant d'un moteur à combustion interne en un matériau métallique coulé ou forgé ou extrudé, au moins une partie de la surface du composant étant fondue par apport d'énergie et un matériau supplémentaire étant introduit dans le bain fondu généré, et la solidification du bain fondu avec le matériau supplémentaire étant attendue, de telle sorte que la surface du composant soit ensuite durcie dans cette zone, **caractérisé en ce que** le matériau supplémentaire est un fil de remplissage qui contient des fibres.

2. Procédé selon la revendication 1, **caractérisé en ce que** l'apport d'énergie a lieu par exposition à un rayonnement laser ou une combinaison de laser et d'induction.

3. Procédé selon la revendication 1, **caractérisé en ce que** le matériau supplémentaire contient une poudre d'alliage.

4. Procédé selon la revendication 1, **caractérisé en ce que** le matériau supplémentaire contient un matériau à particules dures.

5. Procédé selon la revendication 1, 2, 3 ou 4, **caractérisé en ce que** le matériau supplémentaire contient des composants carburiques et/ou oxydiques.

6. Procédé selon l'une quelconque des revendications précédentes, **caractérisé en ce que** le matériau supplémentaire est en forme de fil et contient au moins un des matériaux supplémentaires indiqués dans les revendications précédentes.

7. Surface d'un composant d'un moteur à combustion interne, dont la surface est au moins partiellement durcie par un procédé selon les revendications précédentes.

8. Composant selon la revendication 7, dans lequel le composant est un constituant d'un moteur à combustion interne.

9. Composant selon la revendication 8, dans lequel le composant est un piston du moteur à combustion interne.
